(19) Europäisches Patentamt
European Patent Office
Office européen des brevets

(11) Numéro de publication: 0 001 953
B1

(12) **FASCICULE DE BREVET EUROPEEN**

(45) Date de publication du fascicule de brevet: 25.11.81

(21) Numéro de dépôt: 78400156.2

(22) Date de dépôt: 30.10.78

(51) Int. Cl.³: C 01 G 39/00, C 10 M 7/06, C 22 C 27/04

(54) **Alliage antifriction son procédé de fabrication ainsi que matrice et lubrifiant contenant un tel alliage.**

(30) Priorité: 07.11.77 FR 7733360

(43) Date de publication de la demande: 16.05.79 Bulletin 79/10

(45) Mention de la délivrance du brevet: 25.11.81 Bulletin 81/47

(84) Etats Contractants Désignés: BE CH DE GB NL

(56) Documents cités:
GB - A - 794 982
GB - A - 956 568
US - A - 2 770 527
US - A - 2 977 302
US - A - 3 825 416
US - A - 4 028 097

NATURE, Vol. 188, (22 oct. 1960) pages 308—309
London, MacMillan and Co.
A. J. HALTNER et al.: "Frictional Properties of Mo disulphide films containing inorganic sulphide additives"

(73) Titulaire: CENTRE STEPHANOIS DE RECHERCHES MECANIQUES HYDROMECANIQUE ET FROTTEMENT Société dite:
Zone Industrielle Sud Rue Benoît Fourneyron
F-42160 Andrezieux Boutheon (FR)

(72) Inventeur: Terrat, Jean-Paul
10 rue Etienne Boisson
F-42000 Saint-Etienne (FR)

(74) Mandataire: Foldès, Georges et al,
CABINET J. BONNET THIRION 95 Bd. Beaumarchais
F-75003 Paris (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 001 953 B1

Alliage antifriction son procédé de fabrication ainsi que matrice et lubrifiant contenant un tel alliage.

La présente invention se rapporte à un alliage antifriction à base de fer, de molybdène et de soufre.

Les compositions de ce type proposées jusqu'à présent ne donnent pas entière satisfaction; elles ne permettent pas de se libérer complètement, de manière satisfaisante, des sujétions de la lubrification classique, huile ou graisse notamment, ce qui est plus particulièrement gênant dans certains domaines tels que le Génie chimique, l'Aérospatial, le Textile, etc.; en outre, en régime de lubrification aléatoire, elles ne permettent pas de garantir de très bas coefficients de frottement.

En particulier, ces matériaux à base de fer, de molybdène et de soufre ne donnent pas de meilleurs résultats que les lubrifiants solides tels que bisulfure de molybdène, biséléniure de tungstène, graphite, etc. ou encore matières plastiques, tous produits dont les applications sont extrêmement limitées, ces lubrifiants solides ayant une mise en oeuvre difficile, tandis que les matières plastiques perdent leurs propriétés lorsque la température s'élève.

La présente invention a pour objet un alliage antifriction à base de fer, de molybdène et de soufre dont la composition permet d'obtenir d'excellentes propriétés et en particulier un frottement même à sec, avec un très faible coefficient de frottement.

Suivant un aspect de l'invention, l'alliage antifriction suivant l'invention est caractérisé en ce que la composition pondérale de ses constituants est comprise entre:

| | | |
|---|---|---|
| Fer | : | 8,0% et 26,6% |
| Molybdène | : | 41,0% et 62,5% |
| Soufre | : | 23,3% et 40,5% |

Cette composition correspond à une zone extrêmement limitée du diagramme ternaire fer-molybdène-soufre (moins de 5% de l'aire totale du diagramme) et permet d'une manière surprenante un excellent frottement même à sec avec un coefficient de frottement dont la valeur est très faible. Cet alliage est polyphasé et comporte au moins un composé dispersé dans une matrice cristalline répondant à la composition

$$T_2 : Fe_x Mo_{3+y} S_4,$$

dans laquelle x et y sont inférieurs à 1 et plus particulièrement à la composition $Fe\,Mo_4\,S_5$.

Une des phases dispersées dans cette matrice peut être le composé $Fe\,Mo_2\,S_4$ ou encore la phase $\varepsilon$ du diagramme d'équilibre fer-molybdène-soufre.

Suivant un autre aspect encore de l'invention, l'alliage antifriction à base de fer, de molybdène et de soufre est tel qu'il réagit sous l'effet d'un frottement sur une pièce antagoniste pour former sur la surface de celle-ci le sulfure correspondant.

De préférence, les divers aspects de l'invention sont combinés en tout ou partie.

La présente invention a également pour objet un procédé pour fabriquer l'alliage antifriction qui vient d'être décrit.

Suivant l'invention, l'alliage est obtenue notamment, soit par réaction chimique entre le fer, le molybdène et le soufre, soit par fusion, soit par une technique de dépôt sous vide sur un substrat, soit par projection de mélanges de poudres sur un substrat à l'aide d'un chalumeau métalliseur. L'alliage peut être mis en forme par les voies de la métallurgie des poudres. Il peut être incorporé comme charge dans une matrice métallique ou une matrice en polymère ou dans un lubrifiant.

La présente invention est ci-après plus amplement décrite, à titre d'exemple, en référence aux dessins annexés dans lesquels:

la figure 1 est le diagramme ternaire fer-molybdène-soufre;

la figure 2 est une vue analogue à la figure 1 mais sur laquelle est représentée une zone hexagonale correspondant à la composition suivant l'invention;

la figure 3 est une vue à plus grande échelle de cette zone hexagonale;

la figure 4 est une vue micrographique non limitative de la structure de l'alliage suivant l'invention.

On se référera aux figures 1 à 4.

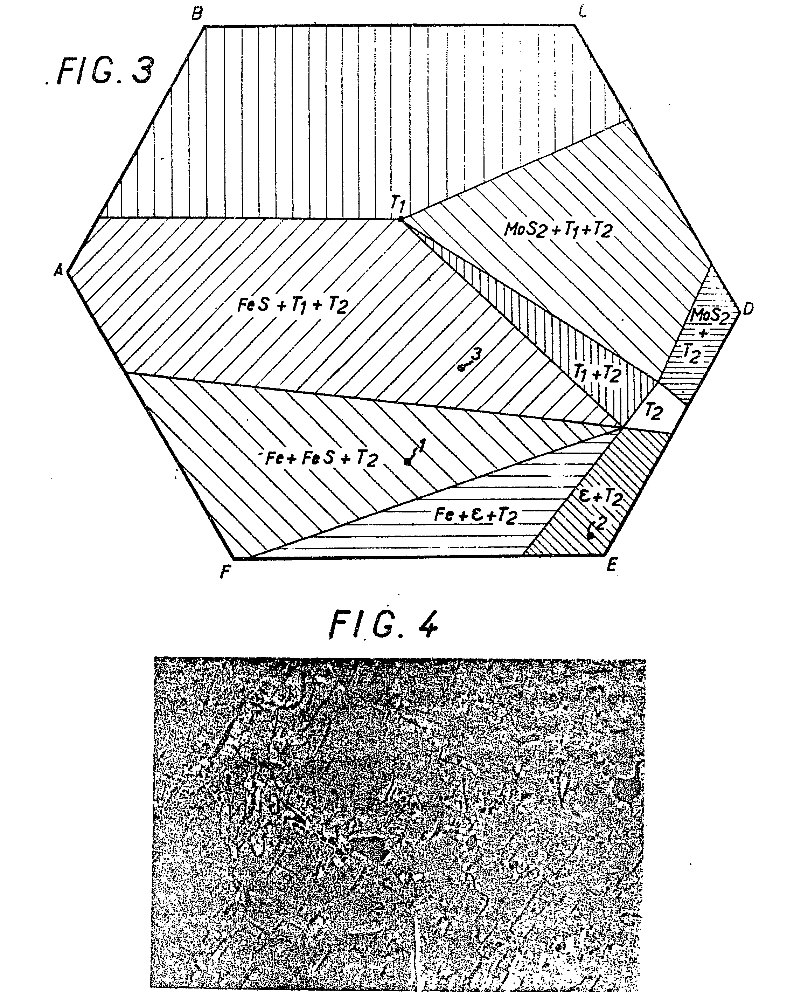

La découverte dont procède l'invention découle des travaux qu'a faits la Demanderesse sur le frottement des alliages ternaires contenant simultanément du fer, du molybdène et du soufre. Ces travaux font apparaitre le comportement tout à fait inattendu que présentent les compositions d'alliages, situées à l'intérieur d'une zone très limitée du diagramme fer-molybdène-soufre (fig. 1), représentée par l'aire ABCDEF (figs. 2 et 3), soit à peine 4,8% de l'aire totale du diagramme.

Lorsque le matériau ayant cette structure frotte sur certains antagonistes, il recouvre cet antagoniste d'une couche dont l'analyse par diffraction des rayons X montre qu'elle est composée, dans sa plus grande partie, du sulfure du métal antagoniste. Par exemple, si le métal antagoniste est le fer, il se recouvrira de sulfure de fer, FeS. Si c'est du nickel, il se recouvrira de sulfure de nickel, NiS. Aussitôt cette couche antagoniste formée, et, ce dès les premières secondes de frottement, le coefficient de frottement, même à sec, atteint une valeur très faible, notamment inférieure de moitié à celle obtenue par exemple avec le bisulfure de molybdène.

Les proportions de fer, molybdène et soufre

délimitant la zone ABCDEF sont représentées avec précision aux figures 2 et 3. Cette zone est située à l'intérieur d'un hexagone ABCDEF correspondant aux proportions suivantes:

| | | |
|---|---|---|
| Fer | : | 8,0% à 26,6% |
| Molybdène | : | 41,0% à 62,5% |
| Soufre | : | 23,3% à 40,5% |

Le matériau selon la présente invention est un solide polyphasé constitué principalement des composés

$$T_1 = FeMo_2S_4$$

et de solutions solides répondant à la formule

$$T_2 = Fe_xMo_{3+y}S_4$$

(x et y étant compris entre 0 et 1). Il peut également contenir des quantités variables du composé défini intermétallique $\varepsilon$.

On peut, par le choix judicieux de la composition du matériau à l'intérieur de la zone ABCDEF, valoriser à volonté certaines de ses propriétés, et, plus particulièrement, ses caractéristiques mécaniques et sa résistance à la corrosion, sans affecter en aucune manière ses propriétés de frottement. En particulier, la présence du composé intermétallique confère au matériau une très grande dureté et renforce considérablement sa résistance à la corrosion qui est alors proche de celle du molybdène.

Outre le composé $Fe\,Mo_2\,S_4$ et/ou les solutions solides $Fe_x\,Mo_{3+y}\,S_4$, le matériau peut contenir également les composés définis FeS et $MoS_2$. La figure 3 indique le domaine d'existence de ces différents composés. Même à sec, la valeur du coefficient de frottement reste très faible et très inférieure à celle qu'on obtiendrait avec le sulfure de fer ou le bisulfure de molybdène seuls.

La figure 4 est une micrographie illustrant un exemple non limitatif de structure d'un alliage conforme à l'invention, où l'on peut voir la phase $Fe\,Mo_2S_4$ (taches blanches) dispersée dans une matrice de $Fe_x\,Mo_{3+y}\,S_4$ (fond gris). Les taches noires correspondent à des porosités.

Le matériau antifriction ne contient ni fer libre, ni molybdène libre. Il peut être broyé à l'état de poudre et incorporé comme charge à un autre matériau fritté, par exemple du fer ou un polymère, ou dans un lubrifiant classique tel une huile ou une graisse. De même, par ses caractéristiques mécaniques proches de celles des métaux, ils peut être utilisé à l'état massif, sa mise en oeuvre s'effectuant par coulée ou par les voies de la métallurgie des poudres, particulièrement le frittage ou la compression à chaud ou la compression isostatique à chaud, ou encore par extrusion à chaud, ou par tout autre procédé de mise en forme et il peut également être utilisé en couche épaisse pouvant atteindre jusqu'à plusieurs dizaines de microns déposés par placage ou par métallisation à l'arc, ou sous vide, ou par tout autre procédé de traitement de surface approprié sur une pièce mécanique de forme quelconque, chose impossible à réaliser avec les lubrifiants solides classiques dont les caractéristiques mécaniques sont telles que lorsque les couches déposées dépassent quelques microns d'épaisseur, elles sont immédiatement éliminées dans la zone de contact, ou encore elles se détruisent par suite de leur trop grande fragilité.

Dans tous les cas, le fer, le molybdène et le soufre doivent être unis chimiquement. Si la fabrication du matériau passe par le stade intermédiaire d'une poudre, celle-ci devra avoir été obtenue par chauffage, avec ou sans fusion, d'un mélange intime des trois éléments à une température suffisante pour qu'il y ait combinaison. Dans les autres cas, le processus de mise en oeuvre devra être tel que cette combinaison ait lieu dans une atmosphère réactive contenant du soufre.

Les exemples donnés ci-après, à titre non limitatif, illustrent les performances remarquables de l'alliage selon l'invention.

Exemple 1

Des poudres de fer, de molybdène et de soufre sont mélangées dans les proportions suivantes: 19% de fer, 55% de molybdène, 26% de soufre, représentées par le point 1 sur les figures 2 et 3. Le mélange est porté à 800°C, température à laquelle se développe entre ces trois éléments une réaction de combinaison. Le produit obtenu est alors broyé, homogénéisé, puis comprimé sous une pression de 4000 daN/cm² de façon à obtenir une plaquette parallélépipédique de dimensions

$$18\ mm \times 30\ mm \times 8\ mm$$

qui est ensuite maintenue sour atmosphère d'argon, pendant 4 heures à 1100°C. La dureté de la plaquette sous une charge de 50 g est de l'ordre de 480 Vickers.

Cette plaquette est alors maintenue en contact par une charge d'appui de 36 daN, avec une bague en acier 16NC6 (0,16% de carbone, 1,5% de nickel et 0,9% de chrome), cémenté et trempé, de diamètre 35 mm et tournant sur son axe avec une vitesse de 1,1 m/s. Le coefficient de frottement est alors enregistré, il est trouvé constant et égal à 0,035. Après 5 heures d'essai, l'éprouvette est démontée et pesée, la perte de poids est de 0,5 mg.

La bague antagoniste est colorée en noir, l'analyse aux rayons X montre qu'elle est recouverte d'un film très mince de sulfure de fer FeS.

Dans les mêmes conditions d'essai, une plaquette en acier mi dur au carbone revêtue de bisulfure de molybdène par pulvérisation à l'aide d'une bombe aérosol permet d'atteindre un

coefficient de frottement constant de 0,08.

Exemple 2

Une couche d'alliage fer-molybdène-soufre d'epaisseur 45 microns a été déposée sur une plaquette en acier XC (à 0,38% de carbone) par pulvérisation cathodique réactive Magnétron à partir d'une cible contenant 22,7% en poids de fer et 77,3% en poids de molybdène et d'une atmosphère résiduelle contenant $10^{-4}$ Torr ($13,3 \times 10^{-3}$ Pa) d'hydrogène sulfuré. Pendant toute la durée du dépôt, le substrat est chauffé à la température de 600°C.

L'analyse radiocristallographique de cette couche a montré la présence de la phase $\varepsilon$ dispersée dans une matrice de composition $Fe\,Mo_4\,S_5$ correspondant aux valeurs x = 0,8 et y = 0,2 de la formule $Fe_x\,Mo_{3+y}\,S_4$.

L'analyse quantitative du dépôt montre qu'il contient:

| | |
|---|---|
| Fer | : 15,5% |
| Molybdène | : 61,3% |
| Soufre | : 23,2% |

Cette composition est matériallisée par le point 2 sur les figures 2 et 3.

La dureté Vickers sous une charge de 50 g de la couche formée est de l'ordre de 650 Hv. La plaquette ainsi revêtue ne présente par ailleurs aucune altération superficielle après 100 heures d'exposition en brouillard salin.

La plaquette étant mise en frottement dans les conditions d'essai décrites à l'exemple 1, la bague antagoniste étant en acier recouvert d'une couche d'épaisseur 20 microns de nickel déposé par voie chimique, le coefficient de frottement relevé durant l'essai étant constant et égal à 0,02, l'usure après 2 heures d'essai était de 0,1 mg.

Dans les mêmes conditions, un témoin constitué d'une plaquette d'alliage fer-molybdène-soufre de composition: fer 40% en poids, molybdène 39%, soufre 21% conduit à un coefficient de frottement égal à 0,18 et l'usure relevée après 2 heures d'essai était de 53 mg.

Exemple 3

Un alliage fer-molybdène-soufre dont la composition représentée par le point 3 sur les figures 2 et 3, soit 17% de fer, 55% de molybdène et 28% de soufre est préparé par la méthode indiquée à l'exemple 1. Finement broyé, ce composé est mélangé à de la poudre de fer dans les proportions de 85% de fer et 15% d'alliage fer-molybdène-soufre, comprimé sous une charge de 4500 daN/$cm^2$ de façon à obtenir une plaquette parallélépipédique qui est portée pendant 2 heures à la température de 1100°C sous atmosphère d'argon.

Dans les conditions d'essai définies dans l'exemple 1 ci-dessus, le coefficient de frottement relevé au cours de l'essai était constant et égal à 0,045, l'usure après 2 heures d'essai était de 0,2 mg.

Le témoin constitué d'un mélange de 85% de fer et 15% de bisulfure de molybdène, comprimé et chauffé et testé dans les mêmes conditions présentait un coefficient de frottement égal à 0,085, et l'usure après 2 heures d'essai était de 17,6 mg.

Exemple 4

Un alliage fer-molybdène-soufre identique à celui de l'exemple 3 est finement broyé de façon à obtenir une poudre dont la taille des grains n'excède pas 50 $\mu$m. Cette poudre est alors mise en suspension dans une huile neutre (vaseline demi blanche 26) à raison de 1 gramme de poudre pour 100 grammes d'huile.

Dans les conditions d'essai de l'exemple 1, avec une plaquette en acier non allié à 0,32% de carbone et une bague en acier 16 NC 6 cémenté trempé, le coefficient de frottement en présence du lubrifiant ainsi défini est de 0,016, alors que dans les mêmes conditions l'utilisation de vaseline pure conduit à un coefficient de frottement égal à 0,12 et que la même huile chargée de 1% de graphite conduit à un coefficient de frottement égal à 0,07.

**Revendications**

1. Alliage antifriction à base de fer, de molybdène et de soufre possédant la propriété de frotter même à sec, avec un très faible coefficient de frottement, caractérisé en ce qu'avec une composition pondérale de ses constituants comprise entre:

| | |
|---|---|
| Fer : | 8,0% et 26,6% |
| Mo : | 41,0% et 62,5% |
| S : | 23,3% et 40,5% |

il est polyphasé et comporte au moins un composé dispersé dans une matrice cristalline répondant à la composition

$$T_2 : Fe_x\,Mo_{3+y}\,S_4,$$

dans laquelle x et y sont inférieurs à 1.

2. Alliage antifriction suivant la revendication 1, caractérisé en ce que la matrice cristalline $T_2$ répond à la composition $Fe\,Mo_4\,S_5$.

3. Alliage antifriction suivant la revendication 1 ou la revendication 2, caractérisé en ce que dans la matrice cristalline $T_2$ est dispersé au moins $T_1 : Fe\,Mo_2\,S_4$.

4. Alliage antifriction suivant l'une quelconque des revendications 1 à 3, caractérisé en ce que la proportion en poids de Mo est au moins égale à 55,0%.

**Patentansprüche**

1. Antifriktionslegierung auf Eisen-, Molybdän- und Schwefelbasis, mit der Eigenschaft, selbst bei Trockenreibung einen sehr niedrigen Reibungskoeffizienten aufzuweisen, dadurch gekennzeichnet, daß sie mehrphasig ist mit einer Gewichtszusammensetzung ihrer Bestandteile zwischen:

Eisen: 8,0% und 26,6%

Mo : 41,0% und 62,5%

S : 23,3% und 40,5%

und wenigstens eine Verbindung enthält, die in einem Kristallgitter verteilt ist und der Zusammensetzung

$$T_2 : Fe_x\, Mo_{3+y}\, S_4$$

entspricht, worin x und y kleiner als 1 sind.

2. Antifriktionslegierung nach Anspruch 1, dadurch gekennzeichnet, daß das Kristallgitter $T_2$ der Verbindung $Fe\, Mo_4\, S_5$ entspricht.

3. Antifriktionslegierung nach Anspruch 1 oder 2, dadurch gekennzeichnet, daß in dem Kristallgitter $T_2$ wenigstens

$$T_1 : Fe\, Mo_2\, S_4$$

verteilt ist.

4. Antifriktionslegierung nach einem der Ansprüche 1—3, dadurch gekennzeichnet, daß der Gewichtsanteil von Mo wenigstens gleich 55% ist.

**Claims**

1. Anti-friction alloy based on iron, molybdenum and sulphur, possessing the property of rubbing with a very low coefficient of friction even when dry, characterised in that, at a weight composition of its constituents between the following limits:

Iron: 8.0% and 26.6%

Mo : 41.0% and 62.5%

S : 23.3% and 40.5%

it is a polyphase material and comprises at least one compound dispersed in a crystalline matrix corresponding to the composition

$$T_2 : Fe_x\, Mo_{3+y}\, S_4,$$

in which x and y are less than 1.

2. Anti-friction alloy according to Claim 1, characterised in that the crystalline matrix $T_2$ corresponds to the composition $Fe\, Mo_4\, S_5$.

3. Anti-friction alloy according to Claim 1 or Claim 2, characterised in that at least

$$T_1 : Fe\, Mo_2\, S_4$$

is dispersed in the crystalline matrix $T_2$.

4. Anti-friction alloy according to any one of Claims 1 to 3, characterised in that the proportion by weight of Mo is at least 55.0%.

FIG. 1

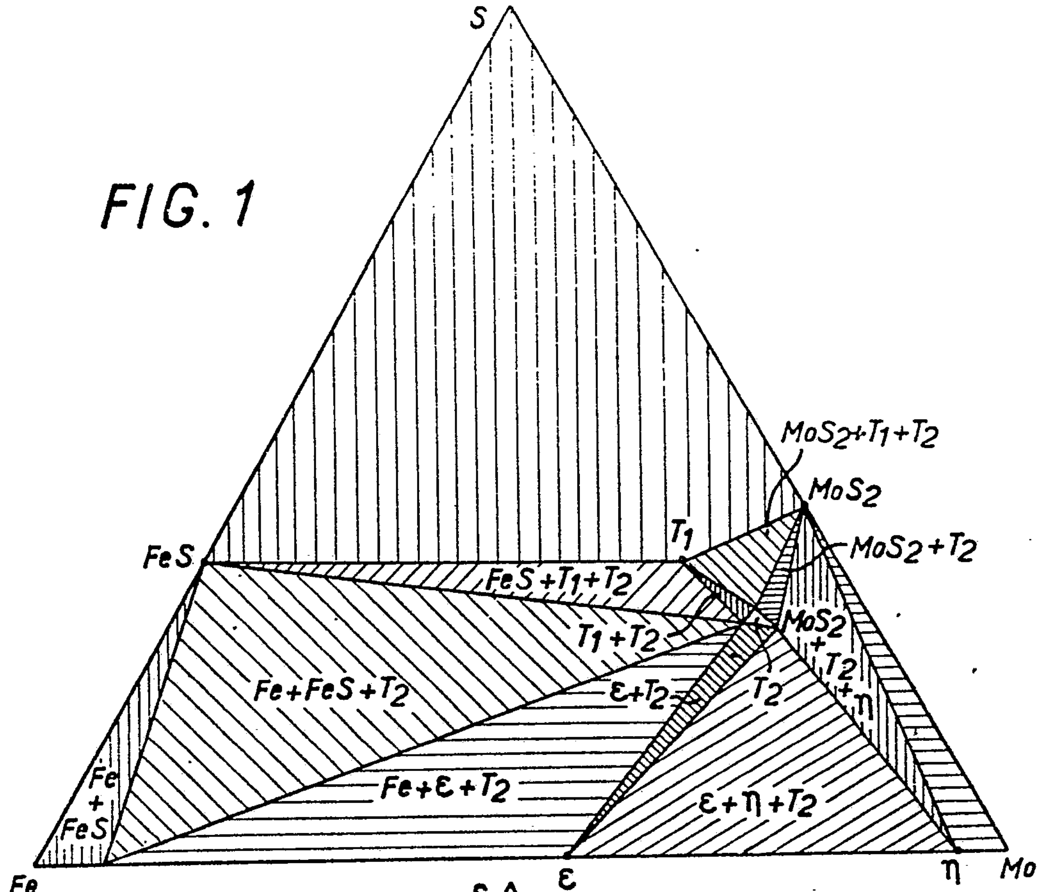
S
MoS2+T1+T2
MoS2
MoS2+T2
T1
FeS
FeS+T1+T2
T1+T2
MoS2
+
T2
+
η
Fe+FeS+T2
ε+T2
T2
Fe
+
FeS
Fe+ε+T2
ε+η+T2
Fe
ε
η
Mo

FIG. 2

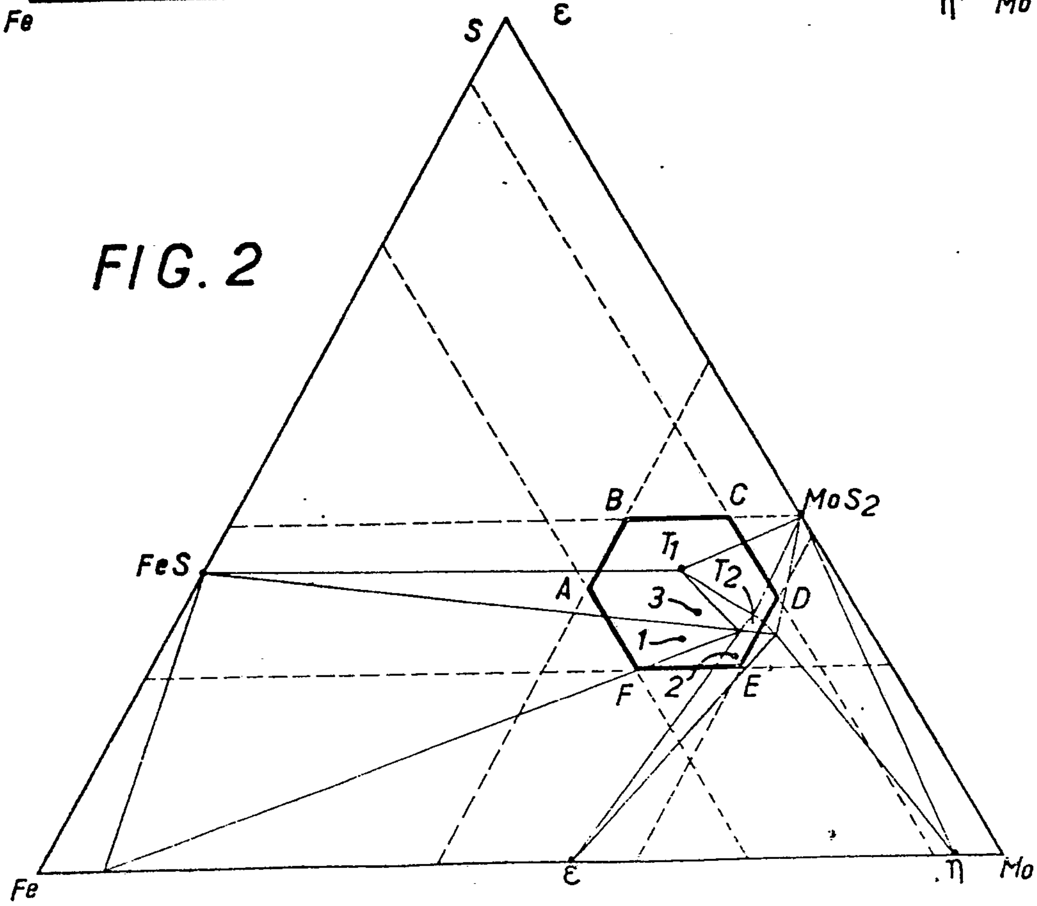
S
B
C
MoS2
FeS
T1
T2
A
D
3
1
F
2
E
Fe
ε
η
Mo

FIG. 3

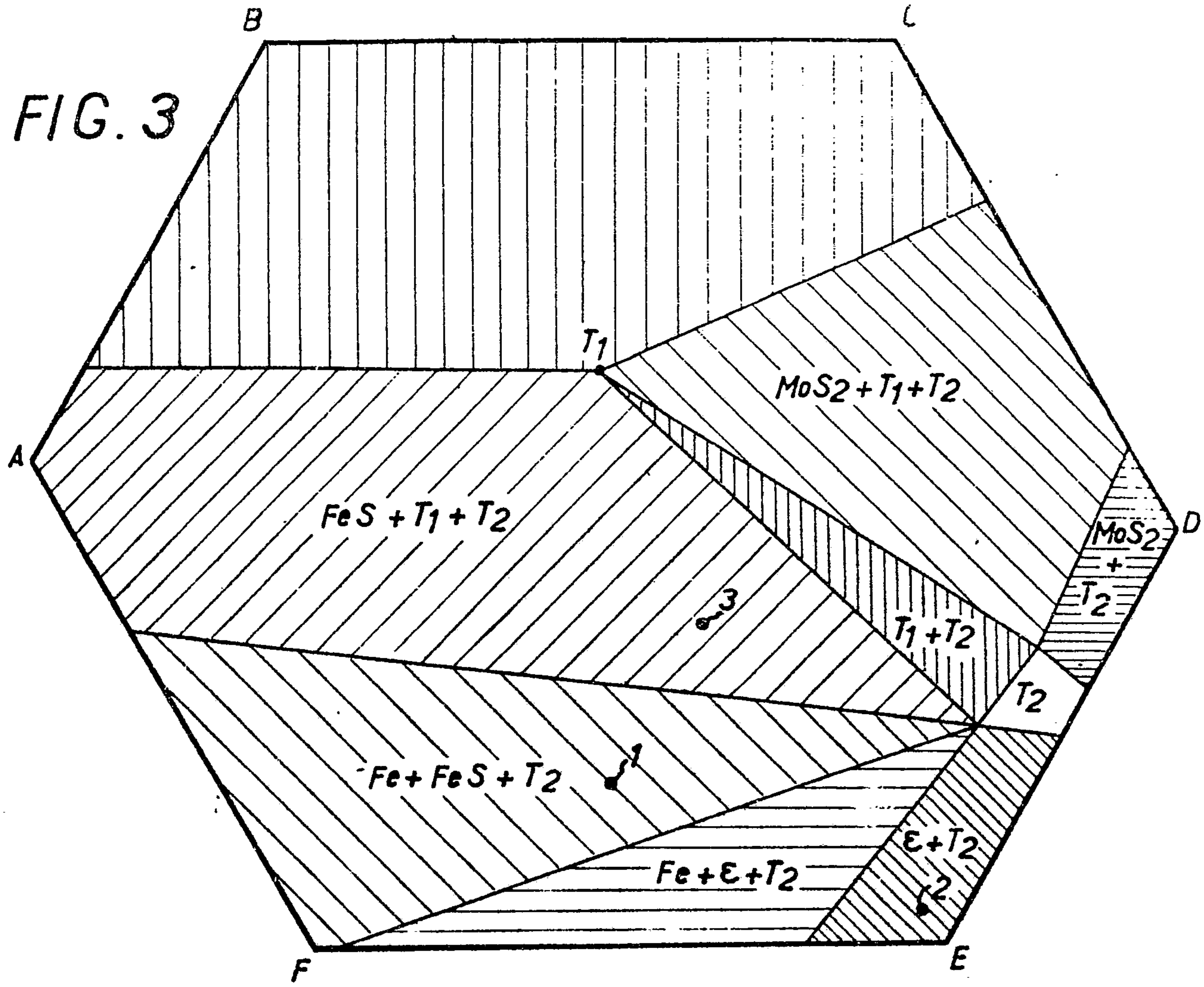
B
C
A
D
F
E
T1
MoS2 + T1 + T2
FeS + T1 + T2
MoS2
+
T2
3
T1 + T2
T2
1
Fe + FeS + T2
ε + T2
Fe + ε + T2
2

FIG. 4